# EUROPEAN PATENT SPECIFICATION

(11) **EP 0 316 622 B1**
(45) Date of publication and mention of the grant of the patent: **04.08.1993**
(21) Application number: 88117733.1
(22) Date of filing: 25.10.1988
(51) Int. Cl.: B08B 5/00, B07B 4/02, B07B 7/06, B29B 9/16

(54) **Method and apparatus for elutriation of shaped particles of polymeric resin**
Verfahren und Gerät zur Reinigung von polymerischen Harzteilchen
Méthode et dispositif de nettoyage des particules de résine polymère

(30) Priority: 20.11.1987 US 123404
(43) Date of publication of application: 24.05.1989
(73) Proprietor: GENERAL ELECTRIC COMPANY, Schenectady New York 12305 (US)
(72) Inventor: Ashworth, Jerry Dale, Mount Vernon Indiana 47620 (US)
(74) Representative: Pratt, Richard Wilson

(56) References cited:
- FR-A- 324 817
- US-A- 2 765 079
- US-A- 4 699 710

## Description

### Field of the Invention

This invention relates to methods and apparatus for separating shaped particles of a polymeric resin from contaminating fines and smaller foreign materials.

### Brief Description of the Prior Art

Synthetic polymeric resins manufactured for use in thermoplastic molding or extrusion processes are frequently prepared in the form of continuous lengths of rods, strands, filaments or sheets. To facilitate handling, shipping and storage, the continuous lengths are often severed, cut or chopped into small shaped particles such as pellets. The comminuation procedure, such as pelletization co-produces fines, dust and small particles in association with the desired shaped particle. The dust, fines or small particles are undesirable (in many instances) contaminants of the desired shaped particles. Their presence may result in an inhomogeneity which can adversely affect use of the shaped particles in certain thermally processed fabrications from the resin. For this reason, it is frequently desirable to clear the desired shaped particles and separate them from the contaminating dusts, fines and smaller particles which accompany their production.

In the prior art, elutriators have been available, for use in cleaning or elutriating shaped particles of polymeric resins prior to their use in thermoplastic resin processing. One example of such elutriators is the Waeschle Elutriator. This commercially available apparatus accelerates the contaminated particles at high velocity (circa-2500 meters/minute) through a relatively large chamber, counter-currently or cross-currently to a high pressure stream of gas. The apparatus is usually located on a pneumatic conveyor entry into a storage vessel and the wash residues (contaminants) are accumulated within the elutriator. These prior art elutriators are relatively sophisticated devices and range in cost from $30,000 to $200,000. They are also costly to operate and maintain in terms of labor, up-keep and removal of accumulated debris.

The apparatus of the present invention is an improvement in the art, providing a method and apparatus which is relatively simple, inexpensive to fabricate and easy to maintain. Less labor is required to maintain apparatus of the invention. Energy requirements are relatively low to practice the method of the invention, and yet a high degree of elutriation is obtained. Other advantages of the method and apparatus of the invention will be apparent to the artisan from the following description.

### SUMMARY OF THE INVENTION

The invention comprises a method of elutriating shaped particles of polymeric resins, which comprises;
suspending a plurality of the particles in a stream of a first gas and propelling the particles at a velocity within the range of from about 0.5 to 12 meters/second in the stream, from a first position to a second position along an axial path;
maintaining the stream of propelled particles within a defined space between the first and second positions and within the range of average density;
agitating the suspended particles within the defined space, with sufficient force to separate from the particles, smaller particles, fines and dusts associated with the shaped particles; and
applying a vacuum force to the defined space, of sufficient force to remove the separated smaller particles, fines and dust from the shaped particles.

The invention also comprises apparatus for carrying out the method of the invention.

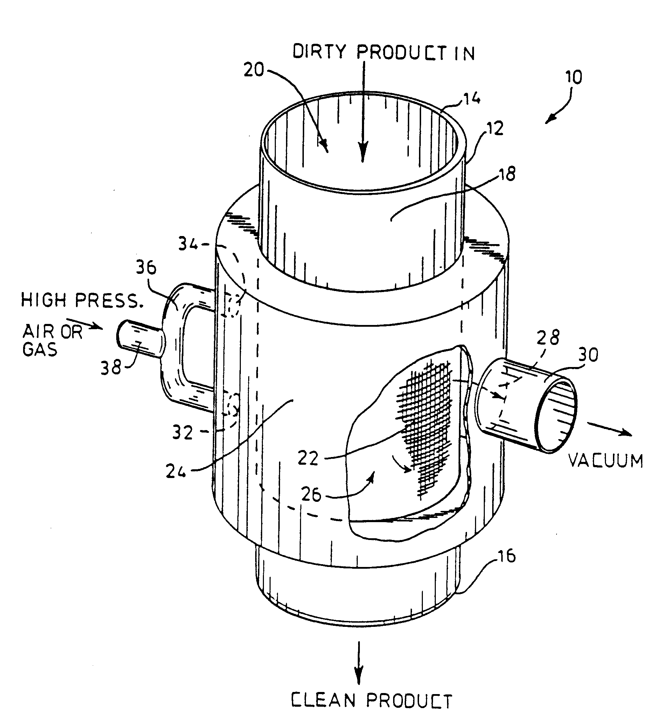

### BRIEF DESCRIPTION OF THE DRAWING

The drawing is a view-in-perspective (partly cut-away) of an embodiment apparatus of the invention.

### DETAILED DESCRIPTION OF THE PREFERRED EMBODIMENTS OF THE INVENTION

Those skilled in the art will gain an appreciation of the invention from a viewing of the accompanying drawing when taken together with a reading of the following description.

The accompanying drawing is a view-in-perspective, partially cut-away , of an embodiment elutriator 10 of the invention. The elutriator 10 comprises a tube 12 having an open inlet 14 and an open outlet 16. Extending between the inlet 14 and the outlet 16 is a tubular body 18, which is an enclosure defining an open chamber 20 between the inlet 14 and the outlet 16. The chamber 20 provides open, unimpeded gas communication between the inlet 14 and the outlet 16. The tubular body 18, at a zone between the inlet 14 and the outlet 16 is perforated with a plurality of openings 22. The openings 22 are of a size and configuration selected to allow the passage of small contaminate elutriate particles, but will not allow passage of any substantial quantity of the shaped polymeric particles to be elutriated as described more fully hereinafter. The body 18 portion or zone bearing the perforations functions as a filter or screen to retain and maintain the elutriated product within the tube 12 while the washings (elutriate) are separated out of the tube 12 at the site of the openings 22. In the embodiment elutriator 10, the tube 12 is a round tube (although any other geometric shape can be used). The openings 22 are on the peripheral circumference of the tube 12 and encircle the periphery of the tube 12 so that the chamber 20 is partially open on all sides at the site of the openings 22, by the openings 22. Fitted over the tube 12 at the site of the openings 22 is a sleeve housing 24. The sleeve housing 24 together with tube 12 enclosed a space 26 between the housing 24 and tube 12. The housing 24 is gas-tight. Gas communication is permitted through the openings 22 between the chamber 20 and the space 26. Apertures 28, 32, 34 allow the connection of a compressed gas line and a vacuum line or conduit with the space 26. The aperture 28 leads into conduit 30 which is a vacuum line. The apertures 32, 34 lead into a manifold 36 which is in gas communication with a compressed gas conduit or pipeline 38. The apertures 28, 32, 34 are all positioned at a level generally aligned with the site of the openings 22 in the tube 12.

The elutriator 10 may be fabricated of any conventional material of sufficient strength and properties to maintain a gas-tight construction, (except for the inlet 14, the outlet 16 and the apertures 28, 32, 34). Representative materials include metals, synthetic polymeric resins, wood and ceramics. A convenient material is iron, advantageously a rust-resistant steel material such as galvanized iron.

In use, the elutriator 10 is mounted to receive in the inlet 14 a stream of shaped polymeric resin particles, the dirty product for example, of a pelletizer at the end of a polymeric resin shaped product line such as a resin extruder. Advantageously the elutriator 10 is incorporated in the process line immediately following the pelletizer or other means of comminuating the polymeric resin solid. The outlet 16 may be connected with a storage vessel for the clean, elutriated product which passes through the elutriator 10. The vacuum conduit line 30 is connected to a vacuum source, which may include a reservoir means for the collection of washings separated through the openings 22. The conduit 38 is connected to a source of a compressed gas and delivers this gas to the manifold 36 and ultimately to the openings 32, 34. Although two openings 32, 34 are shown in the elutriator 10, one may be sufficient under certain circumstances (for example, relating to the length of chamber 20) or more than 2 may be desirable as will be discussed more fully hereinafter.

Although the elutriator 10 may be constructed in any desired dimensions, it will be appreciated that good engineering practices will dictate certain relationships, such as for example the size of the vacuum conduit 30 and the associated aperture 28 in relation to the diameter of the tube 12 and the open screen area formed by the openings 22. The operation of the elutriator 10 will be described below in relation to an embodiment elutriator having the following dimensions:
Tube 12 diameter - 5 to 25 cm.
Tube 12 length - 4 cm to 180 cm
Tube openings 22 - sufficient to provide a 4 to 40 mesh screen.

The apparatus 10 may be used in carrying out the method of the invention according to the following procedure. A supply of shaped particles of a polymeric resin, recently comminuated for example by pelletization is provided as immediately received from the pelletizer, in association with fines, powders, small particles of the pelletization and other contaminating materials such as metal chips associated with the pelletizing apparatus. For purposes of illustration, the shaped particles provided have an average diameter of less than 50 microns and may be shaped particles of, for example, polyolefins, polyetheramides, polyurethanes, polycarbonates, polyacrylates, polyphenylene sulfide, polyamides, polyester and the like. The provided particles for elutriation are matched to the particular elutriator 10 in that the openings 22 selected are such that the shaped particles of the polymeric resin will not pass through the openings 22 but contaminating smaller particles will.

The provided shaped particles for elutriation together with the contaminating materials are suspended in a stream of gas, such as air or an inert gas, i.e; a gas which will not adversely affect the chemical composition of the shaped particles to be elutriated. The suspended shaped particles together with contaminants are then propelled at a velocity within the range of from 0.5 to 12 meters/second into the inlet 14 of the elutriator 10 and carried on an axial line through the chamber 20, along the same axial line to and out of the outlet 16 in a condition for storage or immediate use. The discharged particles are separated from and free of the contaminating fines, dusts or smaller particles and metals or other contaminants. The axial line referred to above is a substantially straight axial line as will be appreciated from the drawing. However, although a straight axial line may be preferred to facilitate maintaining a uniform density of propelled particles at all points along the axial line, this is not a necessity and the elutriator 10 may be constructed so as to possess a curvilinear pathway for the suspended and propelled materials to follow in passing from inlet 14 to outlet 16.

During passage of the materials through the chamber 20, the vacuum source described above is activated to create a partial vacuum in space 26. The vacuum created is advantageously of sufficient force to withdraw from the chamber 20, through the openings 22, the unwanted fines, dust, small particles and other contaminant materials which are or became suspended in the stream of gas introduced into the inlet 14. This withdrawal by vacuum through the openings 22 effects a physical separation of the washings from the elutriated shaped polymeric particles which, because of their inability to pass through, the openings 22, are not dissuaded from their passage through outlet 16. The wash materials carried into space 26 by the vacuum force continue in transit from the elutriator 10 through aperture 28 and conduit 30 for ultimate disposal. The vacuum force should not be of a magnitude which would interfere with passage of the desired shaped particles through the chamber 20.

Although a wide range of vacuum may be applied to carry out the method of the invention depending on the dimensions of the elutriator components as described above, a vacuum applied to the space 26 may be, for example, within the range of from 25 to 500 mm hg. when the elutriator 10 possesses the dimensions of diameter, length and openings described above.

An important feature of the elutriator 10 for carrying out the method of the invention is a means for agitating the shaped polymeric particles during their transit through the chamber 20, to assist in separating fines, dust or like contaminants which may be physically adhered to the shaped particles undergoing wash. Adherence may be, in some instances, due to a physical connection, i.e. incomplete severance of a smaller particle or due to a static electrical charge bonding the fines or dust to a surface of the desired product particle or pellet.

The means for agitation of the moving shaped particles may be an ultra-sonic energy wave generator focused on the particles while they are in-transit through the chamber 20. Collision of the energy waves with the many particles will "shake" them and effect a separation of the adhered contaminant dusts, fines and smaller contaminant particles. The ultra-sonic vibrations also maintain the dust and fines in a state of suspension in the carrier gas stream. More specifically the ultra-sonic waves travelling through the gas stream carrying the particles, cause molecules of the gas to vibrate back and forth, causing movement of the entrained particles in a similar back and forth movement. A vibrating particle transmits back and forth motion to adjacent particles. By setting the particles in motion, back and forth, in a localized area, they are shaken free of adhered to fines, dusts and smaller particles.

Ultra-sonic vibrations can be generated and focused on the chamber 20 by acoustic transducers incorporated into the wall of tube 12. The transducer may be driven by an electrical oscillator having a frequency above about 5000 Hertz, preferably 20,000 to 40,000 Hertz. The amplitude of the ultra-sound vibrations are advantageously within the range of from 0.002 to 0.01 mm. with frequencies of from 25 to 25000 cycles per second. Such ultrasonic wave generators are well known in the art and are available from many commercial sources.

Other means will be apparent to those skilled in the art, for agitation (vibration) of the shaped polymeric resin particles as they pass through the chamber 22, to encourage release of adhered dusts, fines and smaller particles. However, a particularly advantageous means, advantageous for simplicity in construction, maintenance and operation is a means for directing a jet of compressed air or inert gas against the shaped polymeric resin particles from a direction transverse to the accelerated velocity path of the particles propelled through the chamber 20, at a point substantially in axial alignment with the apertures 22. In the embodiment elutriator 10 shown in the accompanying drawing a plenum of compressed air or other gas is carried into the conduit 38 and then into manifold 36 for delivery to the apertures 32, 36. Although a wide variety of pressures may be used, a representative jet of compressed gas is released to the space 26 under a pressure of from 1.03 to 6.21 bar 15 to 90 psi). It will be appreciated that the compressed gas introduced into the elutriator 10 should be as clean and free of contaminants such as particles of smoke, dust, pollens, ash, spores and like materials normally found in gases such as air, to avoid any further contamination of the shaped polymeric resin particles to be elutriated by the method of the invention. To accomplish the desired object therefore, it may be advantageous to filter the compressed gas prior to its entry into the elutriator 10 to remove such foreign materials. Any conventional and useful filter means may be used, including electrostatic precipitators placed in-line on the conduit 38. Such devices are well known and are described, for example, in the US-A-2,925,881; US-A-3,040,497; US-A-3,581,462; US-A-3,735,560; US-A-3,763,633; US-A-4,007,024; and US-A-4,022,594. Commercially available gas filtration units capable of removing particles smaller than 0.01 microns with 95% efficiency are available from a large variety of manufacturers such as Filterlab Corp., Houston, Texas.

In another embodiment elutriator 10, associated with an electrostatic precipitator filtration device on the gas conduit 38, one may advantageously employ a means for unipolar (negative or positive) ionization of the compressed gas being delivered to the chamber 20 of the elutriator 10. The ionized gas may, in some cases (depending on the nature of the fines, dusts and smaller particles to be separated from the shaped polymeric resin particles), facilitate and promote release of the contaminants from the shaped polymeric resin particles. This is particularly true when the adherence of the contaminant to the shaped particle is due to an electrostatic force. Advantageously, the compressed gas is treated to achieve an ion concentration of from 100 to 8000 ions per cubic centimeter. Ionizers capable of achieving such levels of concentration are well known and available; see, for example, the US-A-2,933,151 which describes a combination air ionizer and electrostatic precipitator which could be mounted on the conduit 38 of the elutriator 10 of the present invention. The force of the jet of compressed gas will penetrate the space 26 and the chamber 20 through the openings 22, which in this case function as nozzles, to focus the jet in a plurality of sub-jet streams for impingement on a plurality of the shaped polymeric resin particles transitting through the chamber 20. Advantageously the jet will impact on shaped particles with a force sufficient to place them in collision with adjacent particles. A representative force is within the range of from 2 to 100 Kg. The result, like in the use of ultra-sonic agitation, is a violent impact upon the particle to shake loose adhered to dusts, fines or smaller particles. Impacted particles move and collide with adjacent particles, perpetuating the impacts and agitation. In the drawing, two apertures 32, 34 are shown for delivery of jet streams. However, any number may be employed and more will be particularly desired for a lengthened chamber 20 apparatus elutriator 10. So also, one can construct an elutriator 10 with an extension of the manifold 36 so the compressed gas jet is delivered directly into the chamber 20 rather than into the space 26 for ultimate delivery through the nozzles of openings 22. However, less efficiency may be associated with the latter construction, requiring a lengthened tube 12.

Regardless of the specific means selected for the agitation or vibration of the particles transitting chamber 20, it will be appreciated that the particles must not be packed so densely that the particles cannot be agitated or vibrated so as to be impacted, shaken and put into motion as described above. Also, there must be sufficient space between particles for the contaminant materials to pass under the vacuum force from the body of the particles as described above. A wide range of densities are of course usable. A minimum density of the particles will be that which provides sufficient space for the particles to be elutriated to move laterally. In general the average density of the particles within the stream of gas carrying them through the chamber 20 is advantageously within the range of from about 200 to 3000 kg/m³, employed on particles having an average diameter of less than 50 microns.

## Claims

1. A method of elutriating shaped particles of polymeric resins, which comprises,
a. suspending a plurality of the particles in a stream of a first gas and propelling the particles at a velocity within the range of from 0.5 to 12 meters/second in the stream, from a first position to a second position along an axial path;
b. maintaining the stream of particles within a defined space between the first and second positions and within the range of average density;
c. agitating the suspended particles within the defined space, with sufficient force to separate from the particles, smaller particles, fines and dusts associated with the shaped particles; and
d. applying a vacuum force to the defined space, of sufficient force to remove the separated smaller particles, fines and dust from the shaped particles.

2. The method of claim 1 wherein the agitation is carried out by impingement of a jet of compressed gas upon some of the suspended particles, from a direction transverse to the axial path.

3. The method of claim 1 wherein the particles have an average diameter of less than 50 µm.

4. The method of claim 3 wherein the particles are polycarbonate.

5. The method of claim 1 wherein the axial path is straight.

6. The method of claim 1 wherein the vacuum is within the range of from about 3.33 to 6.66 kPa (25 to 500 mm Hg).

7. The method of claim 1 wherein the agitation is carried out by impacting the particles in the defined space with a jet of a compressed gas, directed along a line transverse to the axial line.

8. The method of claim 7 wherein the compressed gas is under a pressure of from 1.03 to 6.21 bar (15 to 90 psi).

9. A polymeric resin particle elutriator (10), which comprises;
(A) a tube (12) having
(i) a first open end (14);
(ii) a second open end (16);
(iii) a body (18) between the first end and the second end, said body defining an interior chamber (20) in open fluid communication between the first and second open ends, said body having a plurality of apertures (22) therein opening into the chamber, said apertures being of a size and configuration preventing the passage of particles to be elutriated in the elutriator;
(B) housing means (24) enclosing the tube body and
spaced apart from apertures;
(C) an inlet (38) into the housing means, for a compressed gas; and
(D) an outlet (30) from the housing means for a vacuum source.

10. The elutriator of claim 9 wherein the tube (12) has a diameter of from 5 to 25 cm.

11. The elutriator of claim 10 wherein the tube (12) has a length of from 4 to 180 cm.

12. The elutriator of claim 11 wherein the apertures (22) provide a 4 to 40 mesh screen.

13. The elutriator of claim 12 which further comprises a source of compressed gas in fluid communication with the inlet (38), said gas being under a pressure of from 1.03 to 6.21 bar (15 to 90 psi).

14. The elutriator of claim 13 wherein the outlet (30) is in fluid communication with a vacuum source of from 25 to 500 mm Hg.

## Patentansprüche

1. Verfahren zum Eluieren ausgeformter Polymerharzteilchen, welches umfaßt:
a. Suspendierung einer Vielzahl der Teilchen in einem Strom aus einem ersten Gas und Antreiben der Teilchen mit einer Geschwindigkeit im Bereich von 0,5 bis 10 m/Sek. in dem Strom von einer ersten Position zu einer zweiten Position entlang eines axialen Pfades;
b. Aufrechterhaltung des Stromes der Teilchen in einem definierten Raum zwischen der ersten und der zweiten Position und im Bereich der durchschnittlichen Dichte;
c. Aufrühren der suspendierten Teilchen innerhalb des definierten Raumes mit einer ausweichenden Kraft, um kleinere Teilchen, die feinsten Kornfraktionen und Stäube, die mit den ausgeformten Teilchen assoziiert sind, von den Teilchen abzutrennen und
d. Anlegen einer Vakuumkraft von ausreichender Stärke an den definierten Raum, um die abgetrennten kleineren Teilchen, die feinsten Kornfraktionen und den Staub von den ausgeformten Teilchen zu entfernen.

2. Verfahren nach Anspruch 1, worin das Aufrühren dadurch bewirkt wird, daß ein Strahl aus komprimiertem Gas aus einer Richtung senkrecht zu dem axialen Pfad auf einige der suspendierten Teilchen auftreffen gelassen wird.

3. Verfahren nach Anspruch 1, worin die Teilchen einen mittleren Durchmesser von weniger als 50 µm aufweisen.

4. Verfahren nach Anspruch 3, worin die Teilchen Polycarbonat sind.

5. Verfahren nach Anspruch 1, worin der axiale Pfad geradlinig ist.

6. Verfahren nach Anspruch 1, worin das Vakuum in einem Bereich von etwa 3,33 bis 66,66 kPa (25 bis 500 Hg) beträgt.

7. Verfahren nach Anspruch 1, worin das Aufrühren dadurch erfolgt, daß ein Strahl komprimierten Gases entlang einer Linie quer zur axialen Linie in dem definierten Raum auf die Teilchen aufprallt.

8. Verfahren nach Anspruch 7, worin das komprimierte Gas unter einem Druck von 1,03 bis 6,21 Bar (15 bis 90 psi) steht.

9. Eluiervorrichtung (10) für Polymerharzteilchen, welche umfaßt:
(A) ein Rohr (12) mit
(I) einem ersten offenen Ende (14),
(II) einem zweiten offenen Ende (16),
(III) einem Boden (18) zwischen dem ersten Ende und dem zweiten Ende, wobei dieser Boden eine innere Kammer (20) definiert, die in offener Fluidverbindung zwischen dem ersten und dem zweiten offenen Ende steht, wobei der Boden eine Vielzahl von Öffnungn (22) aufweist, die sich in die Kammer Öffnen, wobei diese Öffnungen eine Größe und eine Konfiguration aufweisen, die den Durchgang der in dem Eluator zu eluierenden Teilchen verhindern,
(B) ein Gehäuse (24), das den Rohrboden umfaßt und von den Öffnungen mit Abstand angeordnet ist,
(C) einen Einlaß (38) in das Gehäuse für das komprimierte Gas und
(D) einen Auslaß (30) aus dem Gehäuse für eine Vakuumquelle.

10. Eluiervorrichtung nach Anspruch 9, worin das Rohr (12) einen Durchmesser von 5 bis 25 cm aufweist.

11. Eluiervorrichtung nach Anspruch 10, worin das Rohr (12) eine Länge von 4 bis 180 cm aufweist.

12. Eluiervorrichtung nach Anspruch 11, worin die Öffnungen (22) ein 4 bis 40 Maschinen Sieb bilden.

13. Eluiervorrichtung nach Anspruch 12, die weiterhin eine Quelle für komprimiertes Gas umfaßt, welches in Fluidverbindung mit dem Einlaß (38) steht, wobei das Gas unter einem Druck von 1,03 bis 6,21 Bar (15 bis 90 psi) steht.

14. Eluiervorrichtung nach Anspruch 13, worin der Auslaß (30) in Fluidverbindung mit einer Vakuumquelle von 25 bis 500 mm Hg steht.

## Revendications

1. Procédé de d'élutriation de particules formées en résines polymères, qui comporte:
a. la suspension d'une pluralité de particules dans un courant d'un premier gaz et la propulsion des particules à une vitesse située dans une plage comprise entre 0,5 et 12 mètres/seconde dans le courant, depuis une première position jusqu'à une seconde position le long d'un trajet axial;
b. le maintien du courant de particules à l'intérieur d'un espace défini entre les première et seconde positions et dans une plage de densité moyenne;
c. l'agitation des particules en suspension à l'intérieur de l'espace défini, avec une force suffisante pour séparer de ces particules, des particules plus petites, des fines et des poussières associées aux particules formées; et
d. l'application d'une force d'aspiration à l'espace défini, d'intensité suffisante pour éliminer des particules formées, les particules plus petites, les fines et la poussière séparées.

2. Procédé selon la revendication 1 dans lequel l'agitation est effectuée par l'envoi d'un jet de gaz comprimé qui frappe sur quelques-unes des particules en suspension, depuis une direction transversale au trajet axial.

3. Procédé selon la revendication 1 dans lequel les particules ont un diamètre moyen inférieur à 50 µm.

4. Procédé selon la revendication 3 dans lequel les particules sont du polycarbonate.

5. Procédé selon la revendication 1 dans lequel le trajet axial est rectiligne.

6. Procédé selon la revendication 1 dans lequel la dépression se situe dans une plage comprise entre environ 3,33 et 66,66 kPa (25 et 500 mm Hg).

7. Procédé selon la revendication 1 dans lequel l'agitation est effectuée en frappant les particules dans l'espace défini, avec un jet de gaz comprimé, dirigé le long d'une ligne transversale à l'axe.

8. Procédé selon la revendication 7 dans lequel le gaz comprimé est à une pression comprise entre 1,03 et 6,21 bar (15 et 90 psi).

9. Appareil d'élutriation (10) de particules en résine polymère qui comprend:
(A) un tube (12) ayant
(i) une première extrémité ouverte (14);
(ii) une seconde extrémité ouverte (16);
(iii) un corps (18) entre la première extrémité et la seconde extrémité, ledit corps définissant une chambre intérieure (20) en communication de fluide ouverte entre les première et seconde extrémités ouvertes, ledit corps comportant plusieurs ouvertures (22), s'ouvrant dans la chambre, lesdites ouvertures ayant une dimension et une configuration empêchant le passage de particules à nettoyer dans l'appareil d'élutriation;
(B) un moyen (24) formant boîtier renfermant le corps du tube et
espacé des ouvertures;
(C) une entrée (38) dans le moyen formant boîtier, pour un gaz comprimé; et
(D) une sortie (30) du moyen formant boîtier pour une source d'aspiration.

10. Appareil d'élutriation selon la revendication 9 dans lequel le tube (12) a un diamètre compris entre 5 et 25 cm.

11. Appareil d'élutriation selon la revendication 10 dans lequel le tube (12) a une longueur comprise entre 4 et 180 cm.

12. Appareil d'élutriation selon la revendication 11 dans lequel les ouvertures (22) forment un écran de 4 à 40 mesh.

13. Appareil d'élutriation selon la revendication 12 qui comporte en outre une source de gaz comprimé en communication de fluide avec l'entrée (38), ledit gaz étant à une pression comprise entre 1,03 et 6,21 bar (15 et 90 psi).

14. Appareil d'élutriation selon la revendication 13 dans lequel la sortie (30) est en communication de fluide avec une source de dépression comprise entre 25 et 500 mm Hg.
